# EUROPÄISCHE PATENTSCHRIFT

(11) **EP 2 302 183 B1**
(45) Veröffentlichungstag und Bekanntmachung des Hinweises auf die Patenterteilung: **16.01.2019**
(21) Anmeldenummer: 10179392.5
(22) Anmeldetag: 24.09.2010
(51) Int. Cl.: F02M 26/32, F02B 29/04, F28F 9/02, F28F 9/00, F28D 7/16, F28D 21/00

(54) **Abgas- oder Ladeluftwärmeübertrager**
Exhaust gas or charged air heat exchanger
Echangeur de chaleur pour gaz d'échappement ou pour air suralimenté

(30) Priorität: 29.09.2009 DE 102009043264
(43) Veröffentlichungstag der Anmeldung: 30.03.2011
(73) Patentinhaber: MAHLE Behr GmbH & Co. KG, 70469 Stuttgart (DE)
(72) Erfinder: Ghiani, Franco, 74321, Bietigheim-Bissingen (DE); Berking, Niklas, 70469, Stuttgart (DE); Strese, Thomas, 71409, Schwaikheim (DE)
(74) Vertreter: Grauel, Andreas

(56) Entgegenhaltungen:
- WO-A1-2009/068480
- DE-A1- 1 812 560
- GB-A- 2 164 738
- JP-A- H06 257 975
- US-A- 2 512 748
- US-A1- 2009 013 678

## Beschreibung

Die Erfindung betrifft einen Abgas- oder Ladeluftwärmeübertrager gemäß dem Oberbegriff des Anspruches 1 und eine Anordnung zur Rückführung und Kühlung von Abgas einer Brennkraftmaschine gemäß dem Oberbegriff des Anspruches 12.

Wärmeübertrager, insbesondere Abgaswärmeübertrager, werden für verschiedene technische Anwendungen zur Übertragung von Wärme von einem ersten Fluid auf ein zweites Fluid genutzt. Dabei durchströmt sowohl das erste als auch das zweite Fluid den Wärmeübertrager und die Wärme wird dabei von dem ersten auf das zweite Fluid oder umgekehrt übertragen. In einem Abgaswärmeübertrager wird Abgas als erstes Fluid durch eine Vielzahl von als Flachrohren ausgebildeten Rohren durchgeleitet. Um die Flachrohre herum wird dabei Kühlflüssigkeit als zweites Fluid geleitet. Damit wird von dem heißen Abgas Wärme auf die Kühlflüssigkeit übertragen und somit das Abgas gekühlt.

Abgaswärmeübertrager weisen im Allgemeinen ein Gehäuse, zwei Böden mit Öffnungen sowie eine Vielzahl von Rohren auf, deren Enden in den Böden angeordnet sind. Die Rohre mit den beiden Böden sind dabei innerhalb des Gehäuses angeordnet, so dass sich ein erster Strömungskanal in den Rohren für das Abgas und ein zweiter Strömungskanal zwischen den Rohren für die Kühlflüssigkeit in dem Wärmeübertrager bildet. Die Komponenten des Wärmeübertragers bestehen dabei im Allgemeinen aus Metall, insbesondere Aluminium, und sind vorzugsweise stoffschlüssig mittels Löten miteinander verbunden. Aufgrund der hohen Anzahl an Komponenten des Abgaswärmeübertragers aus Aluminium ist eine schwierige, komplexe und teure Herstellung des Abgaswärmeübertragers erforderlich. Der Zusammenbau der Komponenten des Wärmeübertrages vor einem Lötvorgang ist dabei aufwendig und ferner ist eine nachträgliche Reparatur des Wärmeübertragers schwierig sowie eine Dichtprüfung sehr aufwendig und teuer. Auch bei einer Falschlötung ist im Allgemeinen eine ausreichende Betriebssicherheit nicht immer gewährleistet.
Die DE 10 2007 010 474 A1 zeigt einen Wärmetauscher zur Abgaskühlung mit einem Gehäuse, einem ersten Strömungskanal für ein erstes Medium, einem zweiten Strömungskanal für ein zweites Medium, mindestens einem Boden, der mit dem Gehäuse verbunden ist, wobei der Boden mindestens ein Dehnungselement zum Ausgleich von Längsdehnungen aufweist.
Aus der WO 031091650 A1 ist ein Abgaswärmeübertrager, insbesondere für Kraftfahrzeuge mit Abgasrückführung, bekannt. Der Abgaswärmeübertrager umfasst einen Gehäusemantel für ein Kühlmittel und ein von Abgas durchströmtes Rohrbündel, das von dem Kühlmittel umströmt wird. Das Rohrbündel ist von Rohrböden im Gehäuse aufgenommen, wobei Rohrbündel, Rohrböden und Gehäuse einen in sich geschlossenen Kraftschluss bilden und im Kraftfluss ein Schiebesitz angeordnet ist.

WO2009/068480A1 zeigt einen anderen Abgaswärmeübertrager.

Die Aufgabe der vorliegenden Erfindung besteht deshalb darin, einen Wärmeübertrager und eine Anordnung zur Rückführung und Kühlung von Abgas einer Brennkraftmaschine zur Verfügung zu stellen, die einfach und kostengünstig in der Herstellung sind und einen zuverlässigen Betrieb des Wärmeübertragers gewährleisten, insbesondere eine ausreichende Dichtheit aufweisen und Reparaturen mit einem geringen Aufwand durchgeführt werden können.

Diese Aufgabe wird gelöst mit einem Abgas- oder Ladeluftwärmeübertrager gemäß dem unabhängigen Anspruch 1.

Ein Dehnungsspalt zwischen dem Boden und dem Gehäuse gewährleistet, dass Dehnungen zwischen dem Gehäuse und den Rohren mit einem geringen technischen Aufwand, nämlich lediglich dem Dehnungsspalt, ausgeglichen werden können. Aufgrund der hohen Temperaturschwankungen innerhalb des Wärmeübertrages ist ein Mittel zum Ausgleich von Dehnungen zwischen Boden und Gehäuse für einen zuverlässigen und sicheren Betrieb des Wärmeübertragers erforderlich. Ein aus Kunststoff hergestelltes Gehäuse, insbesondere mittels Spritzgießen, das sowohl Ein- als auch Auslassöffnungen für das erste als auch das zweite Fluid aufweist, kann somit einfach und preiswert hergestellt werden. Ein zweiteiliges Gehäuse mit einem Gehäusetopf und einem Gehäusedeckel ist besonders einfach in der Herstellung, weil beim Spritzgießen des Gehäuses lediglich zwei Teile des Gehäuses hergesteilt werden müssen.

Erfindungsgemäß weist der erste und/oder zweite Boden ein umlaufendes Bord auf.

Erfindungsgemäß ist das Bord im Wesentlichen parallel zu einer Achse der Rohre ausgerichtet, so dass das Bord ein Ende des ersten und/oder zweiten Bodens in Richtung der Achse bildet.

Erfindungsgemäß weist das Gehäuse innenseitig eine umlaufende erste und zweite Nut auf.
Vorzugsweise sind das Bord des ersten Bodens in der ersten Nut und das Bord des zweiten Bodens in der zweiten Nut angeordnet.

In einer Variante ist an dem Bord des ersten Bodens eine erste Dichtung angeordnet, so dass die erste Dichtung mit dem Bord des ersten Bodens und dem Gehäuse an der ersten Nut in Kontakt steht. Mittels der Dichtung an dem Bord kann der erste Boden auf einfache und zuverlässige Weise gegenüber dem Gehäuse abgedichtet werden.

Zweckmäßig ist an dem Bord des zweiten Bodens eine zweite Dichtung angeordnet so dass die zweite Dichtung mit dem Bord des zweiten Bodens und dem Gehäuse an der zweiten Nut in Kontakt steht. Mittels der zweiten Dichtung kann somit der zweite Boden besonders einfach gegenüber dem Gehäuse abgedichtet werden. Die Anordnung des Bordes des ersten und/oder zweiten Bodens in der ersten und/oder zweiten Nut zusammen mit der Dichtung ermöglicht eine besonders effektive und zuverlässige Abdichtung zwischen dem Boden und dem Gehäuse,

In einer weiteren Ausführungsform weist die erste und/oder zweite Dichtung wenigstens zwei, vorzugsweise fünf, Verdickungen auf, die mittels wenigstens eines Steges, vorzugsweise mit drei Stegen, miteinander verbunden sind. Aufgrund der Ausbildung von Verdickungen und Stegen bildet sich in vorteilhafter Weise zwischen der ersten und/oder zweiten Dichtung und dem Gehäuse, auch zwischen der Dichtung und dem ersten und/oder zweiten Boden, d. h. dem Bord, eine Kammer aus. Die Dichtung erfolgt dabei mittels einer Dichtfläche zwischen der Dichtung und dem Gehäuse bzw. dem Bord. Aus den Kammern bilden sich somit Dränagekanäle aus denen durch Sollausflussöffnungen am Gehäuse und/oder durch Dränageöffnungen der Dichtung Leckagefluid, insbesondere Kühlflüssigkeit, nach außen geleitet werden kann. Damit kann in vorteilhafter Weise keine Kühlflüssigkeit in den von Abgas durchströmten ersten Strömungskanal eintreten. Kühlflüssigkeit wird somit durch die Dränageöffnung der Dichtung und/oder die Sollausflussöffnung des Gehäuses vor einem Eintreten in den ersten Strömungskanal mit dem Abgas nach außen geleitet.

Insbesondere umschließt die erste und/oder die zweite Dichtung das Bord des ersten und/oder zweiten Bodens wenigstens teilweise, insbesondere vollständig. Bei einem vollständigen Umschließen des Bordes durch die Dichtung ist diese vollständig umgeben, so dass damit eine besonders zuverlässige Abdichtung gewährleistet ist.

In einer weiteren Ausgestaltung ist zwischen der ersten und/oder zweiten Dichtung und dem Bord wenigstens eine Kammer ausgebildet und/oder es ist zwischen der ersten und/oder zweiten Dichtung und dem Gehäuse an der ersten und/oder zweiten Nut wenigstens eine Kammer ausgebildet und/oder die erste und/oder zweite Dichtung weist wenigstens eine Dränageöffnung auf.

In einer ergänzenden Variante weist das Gehäuse einen Dränagekanal und/oder wenigstens eine Sollausflussöffnung auf, um bei Undichtigkeiten zwischen dem ersten und zweiten Strömungskanal das erste und/oder zweite Fluid nach außen abzuleiten und insbesondere münden der Dränagekanal und/oder die Sollausflussöffnung in die wenigstens eine Kammer.

In einer weiteren Variante ist zwischen dem ersten und/oder zweiten Boden außerhalb des Bordes und dem Gehäuse ein Dehnungsspalt vorhanden und/oder zwischen dem Ende des Bordes des ersten und/oder zweiten Bodens und dem Gehäuse ist ein Dehnungsspalt vorhanden und in dem Dehnungsspalt ist die Dichtung angeordnet.

In einer weiteren Ausgestaltung ist zwischen dem Gehäuse und den Rohren ein Strömungsrichter angeordnet. Der Strömungsrichter dient dazu, die Strömung des zweiten Fluides, d. h. insbesondere Kühlflüssigkeit, entsprechend zu steuern. Mittels des Strömungsrichters wird das zweite Fluid möglichst gleichmäßig durch den zweiten Strömungskanal verteilt mit einer möglichst hohen Strömungsgeschwindigkeit. Dadurch soll ein möglichst guter Wärmeübergang von dem ersten auf das zweite Fluid oder umgekehrt gewährleistet werden.

Insbesondere ist der Strömungsrichter zweiteilig, insbesondere zwei Halbschalen umfassend, und vorzugsweise besteht der Strömungsrichter wenigstens teilweise, insbesondere vollständig, aus Kunststoff. Bei einer zweiteiligen Ausführung des Strömungsrichters aus Kunststoff mit zwei Halbschalen kann dieser besonders einfach an den Rohren mit den beiden Böden angeordnet werden.

Erfindungsgemäße Anordnung zur Rückführung und Kühlung von Abgas einer Brennkraftmaschine, insbesondere eines Dieselmotors, umfassend eine Abgasleitung, vorzugsweise mit einer Abgasturbine, eine Ladeluftleitung mit einem, vorzugsweise von der Abgasturbine antreibbaren, Ladeluftverdichter, eine Abgasrückführleitung zur Leitung von Abgas von der Abgasleitung zu der Ladeluftleitung, einen Abgaswärmeübertrager zur Kühlung von Abgas in der Abgasrückführleitung und/oder einen Ladeluftwärmeübertrager zur Kühlung von Ladeluft in der Ladeluftleitung in Strömungsrichtung der Luft nach dem Ladeluftverdichter, vorzugsweise ein Abgassteuerorgan zur Steuerung und/oder Regelung der durch die Abgasrückführleitung leitbaren Menge an Abgas pro Zeiteinheit und/oder vorzugsweise ein Ladeluftsteuerorgan zur Steuerung und/oder Regelung der durch die Ladeluftleitung leitbaren Menge an Ladeluft pro Zeiteinheit, wobei der Abgaswärmeübertrager und/oder der Ladeluftwärmeübertrager als ein in dieser Schutzrechtsanmeldung beschriebener Abgas- oder Ladeluftwärmeübertrager ausgebildet ist. In einer weiteren Ausgestaltung sind innerhalb der Rohre, insbesondere Flachrohre, Turbulenzeinlagen angeordnet. Die Turbulenzeinlagen, beispielsweise Leitbleche, dienen dazu, für die Strömung des ersten Fluides durch die Rohre eine turbulente Strömung zu erzeugen, zur Erhöhung der Wärmeübertragung von dem ersten Fluid auf das zweite Fluid oder umgekehrt.
In einer weiteren Ausgestaltung dienen Strömungsrichterrippen zur Steuerung des Flusses oder der Strömung des zweiten Fluides mittels des Strömungsrichters.

In einer weiteren Ausgestaltung besteht der Strömungsrichter aus Kunststoff.

Zweckmäßig besteht die erste und/oder zweite Dichtung wenigstens teilweise, insbesondere vollständig, aus einem elastischen Material, z. B. Kunststoff oder Gummi.

Vorzugsweise ist der Strömungsrichter unter einer elastischen Vorspannung innerhalb des Gehäuses angeordnet, insbesondere liegen Strömungsrichterrippen unter einer elastischen Vorspannung auf dem Gehäuse auf.

In einer weiteren Ausgestaltung sind zwischen den Rohren Rippen oder Turbulenzeinlagen, d. h. innerhalb des zweiten Strömungskanales, insbesondere für die Kühlflüssigkeit, angeordnet. Dadurch soll möglichst eine turbulente Strömung beim Umströmen der Rohre mittels des zweiten Fluides, insbesondere der Kühlflüssigkeit, erzielt werden.

In einer weiteren Ausgestaltung ist der Strömungsrichter form- und/oder kraftschlüssig mit dem ersten und zweiten Boden, den Rohren und dem Gehäuse verbunden, insbesondere ist der Strömungsrichter einerseits zwischen dem Gehäuse und andererseits dem ersten und zweiten Boden sowie den Rohren eingeklemmt.

Im Nachfolgenden wird ein Ausführungsbeispiel der Erfindung unter Bezugnahme auf die beigefügten Zeichnungen näher beschrieben. Es zeigt:
- Fig. 1: eine perspektivische Ansicht eines Wärmeübertragers,
- Fig. 2: eine perspektivische Ansicht eines Gehäusetopfes und eines Gehäusedeckels mit Strömungsrichter, Böden und Dichtungen des Wärmeübertragers gemäß Fig. 1,
- Fig. 3: eine Explosionsdarstellung des Wärmeübertragers gemäß Fig. 1,
- Fig. 4: eine perspektivische Ansicht des Strömungsrichters mit Böden und Dichtungen des Wärmeübertragers gemäß Fig. 1,

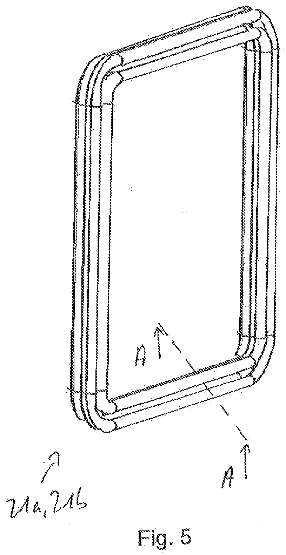

- Fig. 5: eine perspektivische Ansicht der Dichtung des Wärmeübertragers gemäß Fig. 1,
- Fig. 6: eine perspektivische Ansicht des Bodens des Wärmeübertragers gemäß Fig. 1,
- Fig. 7: eine perspektivische Ansicht des Bodens mit der Dichtung des Wärmeübertragers gemäß Fig. 1,
- Fig. 8: einen Schnitt A-A der Dichtung gemäß Fig. 5,
- Fig. 9: einen Schnitt B-B des Bodens gemäß Fig. 6,
- Fig. 10: einen Schnitt C-C des Bodens mit Dichtung gemäß Fig. 7,
- Fig. 11: einen Querschnitt des Wärmeübertragers gemäß Fig. 1,
- Fig. 12: eine Detailansicht einer Verbindung zwischen einer oberen und unteren Halbschale des Strömungsrichters in Fig. 11,
- Fig. 13: einen Längsschnitt des Wärmeübertragers gemäß Fig. 1,
- Fig. 14: eine Detailansicht einer ersten Nut des Gehäuses mit Dichtung und Boden und
- Fig. 15: eine Detailansicht einer zweiten Nut des Gehäuses mit Dichtung und Boden.

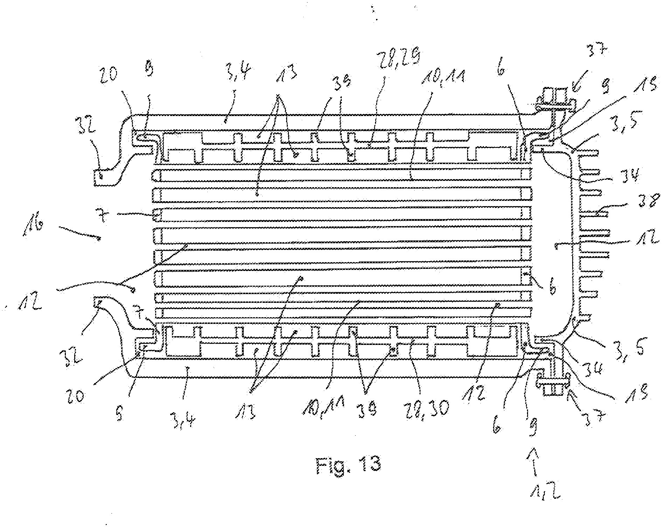

Ein als Abgaswärmeübertrager 2 ausgebildeter Wärmeübertrager 1 dient zur Kühlung von Abgas mittels Kühlflüssigkeit. Der Abgaswärmeübertrager 2 weist dabei einen ersten Strömungskanal 12 zum Durchleiten eines ersten Fluides, nämlich Abgas, auf. Ein zweiter Strömungskanal 13 zum Durchleiten eines zweiten Fluides, nämlich Kühlflüssigkeit, dient dazu, von dem Abgas Wärme auf die Kühlflüssigkeit zu übertragen und dadurch das Abgas zu kühten (Fig. 13). Der Abgaswärmeübertrager 2 wird dabei in einer nicht dargestellten Anordnung zur Rückführung und Kühlung von Abgas einer Brennkraftmaschine eingesetzt, um mittels Kühlflüssigkeit der Brennkraftmaschine das Abgas aus der Brennkraftmaschine zu kühlen und anschließend wieder nach dem Abkühlen in dem Abgaswärmeübertrager 2 einer nicht dargestellten Ladeluftleitung zuzuführen zur weiteren Verbrennung in einem Verbrennungsraum der Brennkraftmaschine.

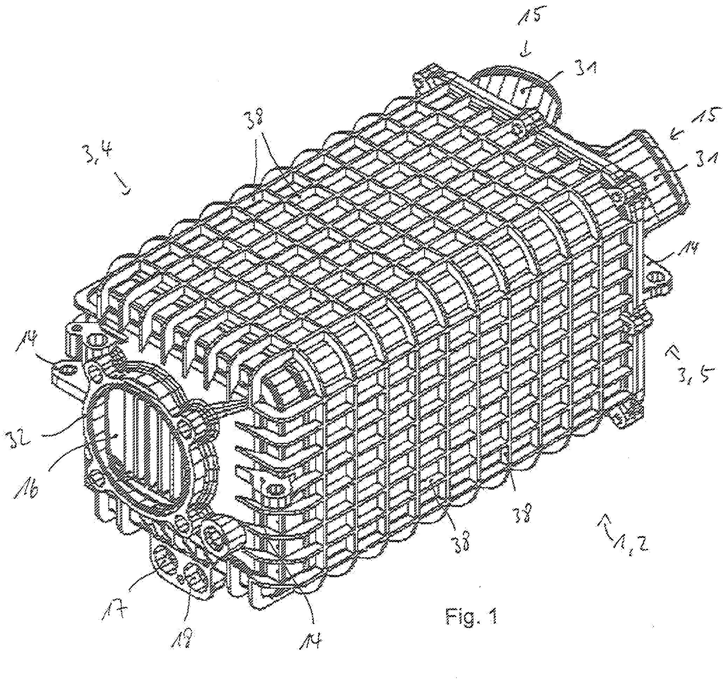

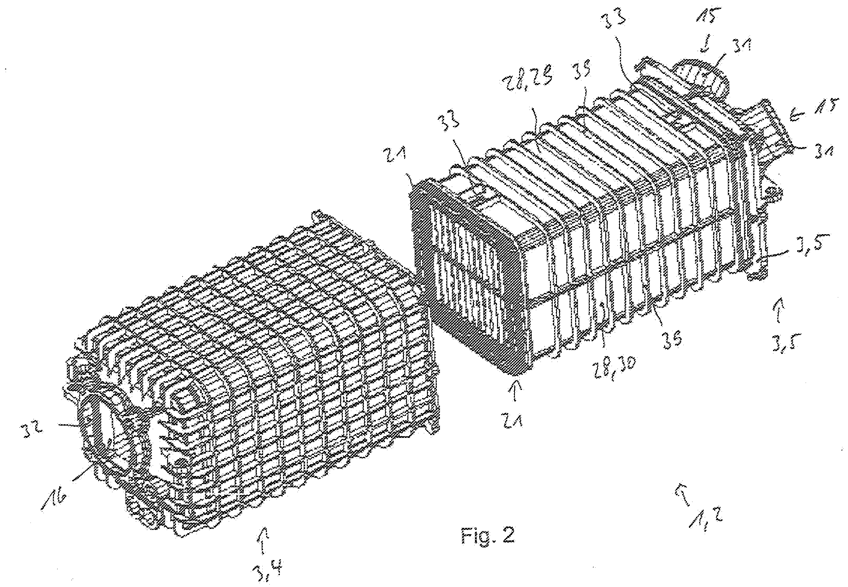

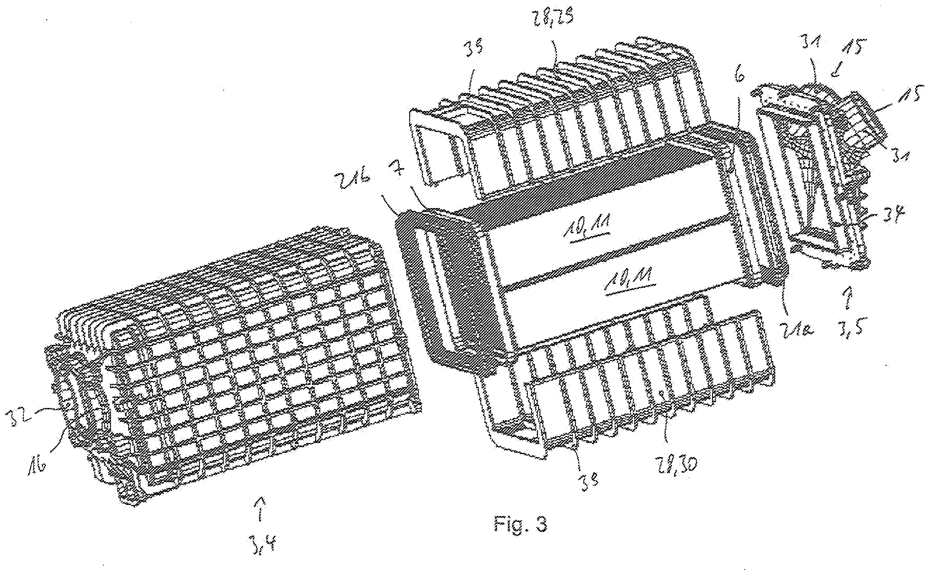

Der Abgaswärmeübertrager 2 umfasst ein Gehäuse 3 mit einem Gehäusetopf 4 und einem Gehäusedeckel 5 (Fig. 1 bis 3 und 13). Das Gehäuse 3, d.h. der Gehäusetopf 4 und der Gehäusedeckel 5 bestehen aus Kunststoff und sind mittels Spritzgießen in einfacher und preiswerter Weise hergestellt, weil das Gehäuse 3 lediglich zwei Bauteile, nämlich den Gehäusetopf 4 und den Gehäusedeckel 5 umfasst. Das Gehäuse 3 weist außenseitig Gehäuserippen 38 auf. Die Gehäuserippen 38 dienen einerseits zur mechanischen bzw. statischen Versteifung des Gehäuses 3 und andererseits dazu, um die Oberfläche des Gehäuses 3 zu vergrößern und dadurch mehr Wärme an die Umgebung des Abgaswärmeübertragers 2 abgeben zu können. An dem Gehäusedeckel 5 sind zwei Einlaufstutzen 31 (Fig. 2 und 3) ausgebildet. Durch die Einlaufstutzen 31 strömt damit durch zwei Einlassöffnungen 15 das Abgas in den ersten Strömungskanal 12 ein. Nach dem Durchströmen des Abgases durch den Abgaswärmeübertrager 2 strömt das Abgas aus einer Auslassöffnung 16 (Fig. 1 bis 3 und 13) wieder aus, die dabei von einem Auslassstutzen 32 gebildet wird. Der Gehäusedeckel 5 weist ferner einen Dichtflansch 34 (Fig. 3 und 13) auf. Das Abgas durchströmt somit den Abgaswärmeübertrager 2 in Fig. 13 von rechts nach links. Die beiden Einlassöffnungen 15 sind dabei aufgrund der Schnittbildung in Fig. 13 nicht dargestellt.

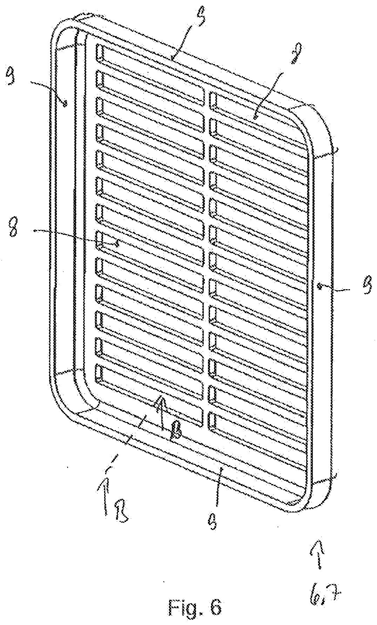

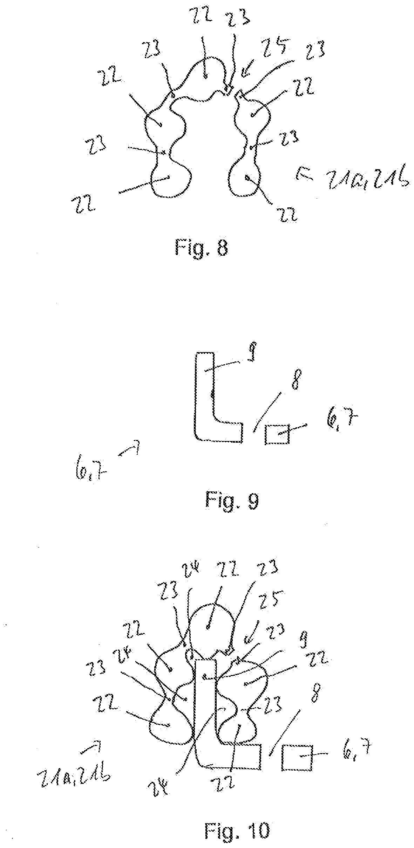

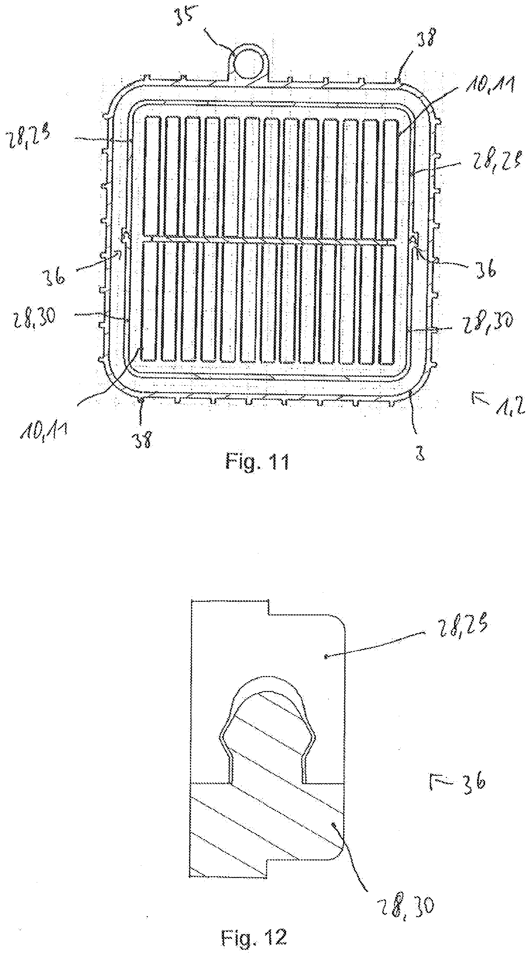

Eine Vielzahl von als Flachrohren 11 ausgebildeten Rohre 10 sind in Öffnungen 8 eines ersten Bodens 6 und eines zweiten Bodens 7 angeordnet (Fig. 11 und 13). Durch die Flachrohre 11, deren Enden in den Öffnungen 8 des ersten und/oder zweiten Bodens 6, 7 angeordnet sind, strömt somit das Abgas. Der erste und zweite Boden 6, 7 weist ferner ein umlaufendes Bord 9 auf (Fig. 6 und 10). Die Rohre 10 und die beiden Böden 6, 7 bestehen dabei aus Metall, insbesondere Aluminium oder Edelstahl, und sind stoffschlüssig, insbesondere mittels Löten, miteinander verbunden. Die Ausbildung der Flachrohre 11 sowie der beiden Böden 6, 7 aus Metall ist erforderlich, weil durch die Flachrohre 11 das Abgas mit sehr hohen Temperaturen, beispielsweise im Bereich von 600° bis 800° C, durchgeleitet wird.

An dem Gehäusetopf 4 ist ferner eine Einlassöffnung 17 für Kühlflüssigkeit und eine Auslassöffnung 18 für Kühlflüssigkeit (Fig. 1) ausgebildet. An die Einlassöffnung 17 und die Auslassöffnung 18 schließt sich jeweils eine Kühlflüssigkeitsleitung 35 (Fig. 11) an. Durch die Kühlflüssigkeitsleitung 35, die aufgrund der perspektivischen Darstellung in Fig. 1, 2 und 3 nicht abgebildet ist, wird die Kühlflüssigkeit in das Innere des Gehäuses 3 eingeleitet. Dabei erfolgt die Einleitung dahingehend, dass der Abgaswärmeübertrager 3 ein Gegenstromkühler ist, d. h. die Kühlflüssigkeit den Abgaswärmeübertrager 2 in einer entgegengesetzten Richtung durchströmt als das Abgas. Abweichend hiervon kann der Wärmeübertrager 1 auch ein Gleichstromwärmeübertrager 1 sein, d. h. das erste und zweite Fluid durchströmen den Wärmeübertrager 1 in der gleichen Richtung.

An dem Bord 9 des ersten und zweiten Bodens 6, 7 ist eine elastische, aus Kunststoff bestehende erste und zweite Dichtung 21a, 21b, angeordnet. An dem Bord 9 des ersten Bodens 6 ist die erste Dichtung 21a und an dem Bord 9 des zweiten Bodens 7 ist die zweite Dichtung 21b angeordnet. Die im Querschnitt ungefähr U-förmige Dichtung 21a, 21b weist dabei fünf Verdickungen 22 und vier Stege 23 auf (Fig. 8 und 10). Die Dichtungen 21a, 21b liegen dabei an den Verdichtungen 22 auf dem Bord 9 bzw. dem ersten und zweiten Boden auf (Fig. 10), so dass sich an den Auflageflächen der Verdickungen 22 zwischen der Dichtung 21a, 21b und dem Bord 9 bzw. dem ersten und zweiten Boden 6, 7 Dichtflächen ausbilden.

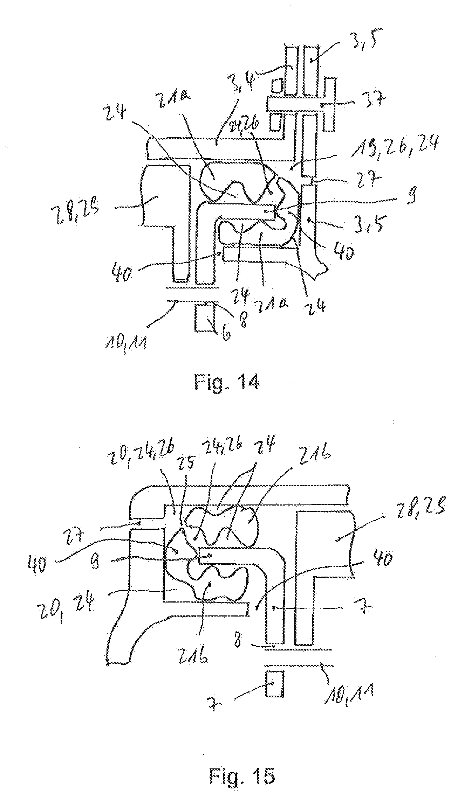

An dem Gehäusetopf 4 ist eine zweite Nut 20 und ferner ist an dem Gehäuse 3 eine erste Nut 19 vorhanden. Die erste Nut 19 bildet sich dabei dahingehend, dass aufgrund der Geometrie des Dichtflansches 34 des Gehäusedeckels 5 und dem Gehäusetopf 4 sich die erste Nut 19 ausbildet (Fig. 13). Die erste Nut 19 bildet sich somit zwischen dem Gehäusetopf 4 und dem Gehäusedeckel 5. Das Bord 9 des ersten Bodens 6 mit der ersten Dichtung 21a ist dabei innerhalb der ersten Nut 19 (Fig. 14) angeordnet. Damit entstehen in analoger Weise zu den Dichtflächen zwischen den Verdickungen 22 und dem ersten Boden 9 auch Dichtflächen zwischen den Verdickungen 22 und dem Gehäuse 3, das im Bereich der ersten Nut 19 von dem Gehäusetopf 4 und dem Gehäusedeckel 5 gebildet bzw. begrenzt wird. Zwischen den Verdickungen 22, dem Steg 23 und dem Bord 9 bzw. in analoger Weise auch am Gehäuse 3 entstehen dadurch Kammern 24. Die Kammern 24 stellen dabei auch einen Dränagekanal 26 dar. Durchdringt beispielsweise Kühlflüssigkeit als Leckageflüssigkeit einen Teil der Dichtflächen zwischen der Dichtung 21a und dem ersten Boden 6 bzw. dem Gehäuse 3, kann aus der Kammer 24 bzw. dem Dränagekanal 26 durch Dränageöffnungen 25 in der Dichtung 21a, 21b Fluid von einer Kammer 24 in eine andere Kammer 24 strömen. Die außenseitig im Bereich des Gehäuses angeordnete Kammer 24 als Dränagekanal 26 steht dabei in Verbindung mit einer Sollausflussöffnung 27 des Gehäuses 3. Das Gehäuse 3 weist dabei innerhalb bzw. an dem Dränagekanal 26 eine Vielzahl von Sollausflussöffnungen 27 auf. Damit kann in vorteilhafter Weise Kühlflüssigkeit, welche einen Teil der Dichtung 21a bzw. 21b überwunden hat, an den Sollausschlussöffnungen 27 aus dem Gehäuse 3 austreten und dadurch kann die Kühlflüssigkeit nicht in den ersten Strömungskanal mit dem Abgas gelangen. Eine sichere und zuverlässige Abdichtung des Abgaswärmeübertrages 2 ist damit in zuverlässiger und einfacher Weise gewährleistet.

Das Bord 9 des zweiten Bodens 7 ist in analoger Weise zu dem ersten Boden 6 in der zweiten Nut 20 des Gehäuses 3, d. h. des Gehäusetopfes 4, angeordnet. Die Abdichtung erfolgt dabei in analoger Weise zu der Abdichtung des Bordes 9 in der ersten Nut 19. Dabei weist der Gehäusetopf 4 auch eine Vielzahl von Söllausflussöffnungen 27 auf und die Dichtung 21b Dränageöffnungen 25 (Fig. 15).

Zwischen dem Gehäuse 3 und dem ersten Boden 6 sowie dem zweiten Boden 7 sind jeweils ein Dehnungsspalt 40 vorhanden. Die Dehnungsspalte 40 ermöglichen, dass Dehnungen der aus Metall bestehenden Flachrohre 11 sowie der beiden Böden 6, 7 bezüglich des Gehäuses 3 aus Kunststoff ausgeglichen werden. Damit können in einfacher Weise unterschiedliche, insbesondere temperaturbedingte Dehnungen zwischen dem Gehäuse 3 und den Rohren 10 ausgeglichen werden.

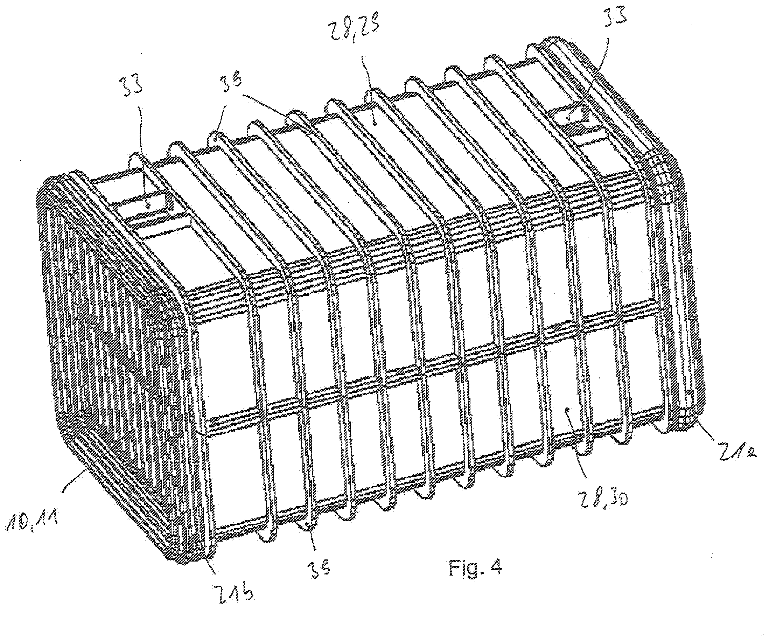

Der Abgaswärmeübertrager 2 umfasst ferner einen Strömungsrichter 28 aus Kunststoff (Fig. 2 bis 4, 11 und 13). Der Strömungsrichter 28 besteht aus einer oberen Halbschale 29 und einer unteren Halbschale 30. Der Strömungsrichter 28 weist dabei innen- als auch außenseitig Strömungsrichterrippen 39 auf. Die obere Halbschale 29 ist dabei mittels einer Nut- und Federverbindung (Fig. 11 und 12) mit der unteren Halbschale 30 verbunden.

Der Strömungsrichter 28 kann damit in einfacher und preiswerter Weise, beispielsweise mittels Spritzgießen, mit nur zwei Teilen aus Kunststoff hergestellt werden. Der Strömungsrichter 28 dient dazu, die Kühlflüssigkeit in dem zweiten Strömungskanal entsprechend zu leiten, dass eine möglichst hohe Wärmeübertragung von dem Abgas auf die Kühlflüssigkeit möglich ist. Dies wird von dem Strömungsrichter 28 durch die Strömungsrichterrippen 39 ermöglicht Der Strömungsrichter 28 weist ferner Öffnungen 33 auf. Die Öffnungen 33 dienen dazu, dass die Kühlflüssigkeit den Strömungsrichter 28 in dem Schnitt gemäß Fig. 11 sowohl von oben nach unten als auch von unten nach oben jeweils an den Öffnungen 33 durchfließen kann. Mittels der Strömungsrichterrippen 39 wird dabei eine möglichst gleichmäßige, insbesondere turbulente, Umströmung der Flachrohre 11 mittels der Kühlflüssigkeit erreicht.

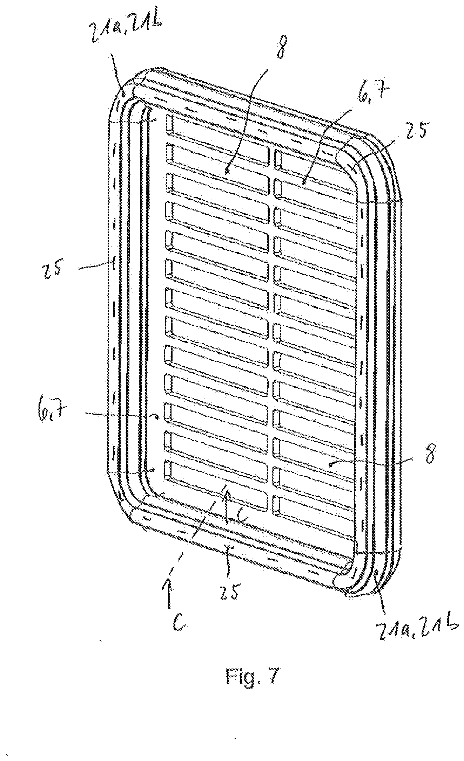

Die Herstellung und Montage des Abgaswärmeübertragers 2 ist dabei besonders einfach. Die Flachrohre 11 sind zunächst lediglich in den Öffnungen 8 des ersten und zweiten Bodens 6, 7 anzuordnen und anschließend in einem Lötofen stoffschlüssig durch Löten miteinander zu verbinden. Der Gehäusetopf 4, der Gehäusedeckel 5 und die beiden Halbschalen 29 und 30 des Strömungsrichters 28 können dabei in einfacher Weise mittels. Spritzgießen durch Kunststoff hergestellt Werden. Dies gilt in analoger Weise auch für die beiden Dichtungen 21a und 21b. Nach dem Verlöten der Flachrohre 11 an den beiden Böden 6, 7, brauchen lediglich die beiden Dichtungen 21a und 21b auf das Bord 9 des ersten und zweiten Bodens 6, 7 aufgeschoben werden (Fig. 7 und 10). Anschließend werden die beiden Halbschalen 29, 30 auf die Flachrohre 11 und die beiden Böden 6, 7 aufgeschoben und mittels der Nut- und Federverbindung 36 miteinander verbunden. Der Strömungsrichter 28 ist dabei zwischen den beiden Böden 6, 7 eingeklemmt, so dass anschließend die miteinander verbundenen Bauteile des Abgaswärmeübertragers 2, nämlich die Flachrohre 11, die beiden Böden 6, 7, die beiden Dichtungen 21a, 21b und die beiden Halbschalen 29, 30 des Strömungsrichters 28 einfach in den Gehäusetopf 4 des Gehäuses 3 einzuschieben sind. Darauffolgend wird der Gehäusedeckel 5 mittels einer Schraubverbindung 37 (Fig. 13 und 14) an dem Gehäusetopf 4 befestigt. Mittels Befestigungseinrichtungen 14, die bereits an dem Gehäuse 3 beim Spritzgießen mit hergestellt werden, kann der Abgaswärmeübertrager 2 an einem Kraftfahrzeug oder einer Anordnung zur Rückführung und Kühlung von Abgas einer Brennkraftmaschine (nicht dargestellt) befestigt werden. Reparatur- und Wartungsarbeiten sind an dem Abgaswärmeübertrager 2 jederzeit einfach möglich, weil hierzu lediglich die Schraubverbindungen 37 zu öffnen sind und anschließend in einfacher Weise aus dem Gehäusetopf 4 nach dem Abnehmen des Gehäusedeckels 5 der Strömungsrichter 8 und die Flachrohre 11 mit den beiden Böden 6, 7 herausgenommen werden können.

Insgesamt betrachtet sind mit dem erfindungsgemäßen Abgas- oder Ladeluftwärmeübertrager 1 und der erfindungsgemäßen Anordnung zur Rückführung und Kühlung von Abgas einer Brennkraftmaschine wesentliche Vorteile verbunden. Bei dem Wärmeübertrager 1 werden lediglich die Flachrohre 11 und die beiden Böden 6, 7 aus Aluminium hergestellt und stoffschlüssig miteinander verbunden. Die anderen Komponenten des Wärmeübertragers 1 werden besonders einfach und preiswert mittels Spritzgießen aus Kunststoff hergestellt. Die Anzahl der Komponenten des Wärmeübertragers 1 ist gering, beispielsweise umfasst das Gehäuse 3 lediglich den Gehäusetopf 4 und den Gehäusedeckel 5. Dabei ist in vorteilhafter Weise an dem aus Spritzgießen hergestellten Gehäuse 3 bereits die Ein- und Auslassöffnungen 15, 16 für das Abgas und die Ein- und Auslassöffnungen 17, 18 für die Kühlflüssigkeit mit ausgebildet. Der Wärmeübertrager 1 ist damit in der Herstellung preiswert und ermöglicht einen zuverlässigen und sicheren Betrieb.

### Bezugszeichenliste

- 1: Wärmeübertrager
- 2: Abgaswärmeübertrager
- 3: Gehäuse
- 4: Gehäusetopf
- 5: Gehäusedeckel
- 6: Erster Boden
- 7: Zweiter Boden
- 8: Öffnungen in Boden
- 9: Bord des Bodens
- 10: Rohre
- 11: Flachrohre
- 12: Erster Strömungskanal
- 13: Zweiter Strömungskanal
- 14: Befestigungseinrichtung
- 15: Einlassöffnung für Abgas
- 16: Auslassöffnung für Abgas
- 17: Einlassöffnung für Kühlflüssigkeit
- 18: Auslassöffnung für Kühlflüssigkeit
- 19: Erste Nut des Gehäuses
- 20: Zweite Nut des Gehäuses
- 21: Erste und zweite Dichtung, 21a, 21b
- 22: Verdickung
- 23: Steg
- 24: Kammer
- 25: Dränageöffnung der Dichtung
- 26: Dränagekanal
- 27: Sollausflussöffnung des Gehäuses
- 28: Strömungsrichter
- 29: Oberer Halbschale des Strömungsrichters
- 30: Untere Halbschale des Strömungsrichters
- 31: Einlaufstutzen für Abgas
- 32: Auslaufstutzen für Abgas
- 33: Öffnung in Strömungsrichter
- 34: Dichtflansch
- 35: Kühlflüssigkeitsleitung
- 36: Nut- und Federverbindung
- 37: Schraubverbindung
- 38: Gehäuserippe
- 39: Strömungsrichterrippe
- 40: Dehnungsspalt

## Patentansprüche

1. Abgas- oder Ladeluftwärmeübertrager (2), umfassend
- ein Gehäuse (3),
- einen ersten und einen zweiten Boden (6, 7) mit Öffnungen (8),
- Rohre (10) als erster Strömungskanal (12) zum Durchleiten eines ersten Fluides, deren Enden in den Öffnungen (8) des ersten und des zweiten Bodens (6, 7) angeordnet sind, wobei
- die Rohre (10) und der erste und der zweite Boden (6, 7) innerhalb des Gehäuses (3) angeordnet sind, so dass sich zwischen dem Gehäuse (3) und den Rohren (10) ein zweiter Strömungskanal (13) zum Durchleiten eines zweiten Fluides, wie eine Kühlflüssigkeit, ausbildet,
wobei zwischen dem ersten und/oder zweiten Boden (6, 7) und dem Gehäuse (3) wenigsten ein Dehnungsspalt (40) ausgebildet ist, um unterschiedliche Dehnungen zwischen dem Gehäuse (3) und den Rohren (10) auszugleichen und das Gehäuse (3) vollständig aus Kunststoff besteht und das Gehäuse (3) aus Kunststoff wenigstens eine Einlass- und Auslassöffnung (15, 16) für das erste Fluid und wenigstens eine Einlass- und Auslassöffnung (17, 18) für das zweite Fluid aufweist und die Rohre (10) und der erste und der zweite Boden (6, 7) vollständig aus Metall, insbesondere Aluminium, bestehen und die Rohre (10) und der erste und der zweite Boden (6, 7) stoffschlüssig mittels Löten miteinander verbunden sind und das Gehäuse (10) zweiteilig ist, mit einem Gehäusetopf (4) und einem Gehäusedeckel (5), wobei der erste und/oder zweite Boden (6, 7) ein umlaufendes Bord (9) aufweist, **dadurch gekennzeichnet, dass** das Bord (9) im Wesentlichen parallel zu einer Achse der Rohre (10) ausgerichtet ist, so dass das Bord (9) ein Ende des ersten und/oder zweiten Bodens (6, 7) in Richtung der Achse bildet, und wobei das Gehäuse (3) innenseitig eine umlaufende erste und zweite Nut (19, 20) aufweist.

2. Abgas- oder Ladeluftwärmeübertrager nach Anspruch 1, **dadurch gekennzeichnet, dass** das Bord (9) des ersten Bodens (6) in der ersten Nut (19) und das Bord (9) des zweiten Bodens (7) in der zweiten Nut (20) angeordnet ist.

3. Abgas- oder Ladeluftwärmeübertrager nach Anspruch 2, **dadurch gekennzeichnet, dass** an dem Bord (9) des ersten Bodens (6) eine erste Dichtung (21a) angeordnet ist, so dass die erste Dichtung (21a) mit dem Bord (9) des ersten Bodens (6) und dem Gehäuse (3) an der ersten Nut (19) in Kontakt steht.

4. Abgas- oder Ladeluftwärmeübertrager nach Anspruch 2 oder 3, **dadurch gekennzeichnet, dass** an dem Bord (9) des zweiten Bodens (7) eine zweite Dichtung (21b) angeordnet ist, so dass die zweite Dichtung (21b) mit dem Bord (9) des zweiten Bodens (7) und dem Gehäuse (3) an der zweiten Nut (20) in Kontakt steht.

5. Abgas- oder Ladeluftwärmeübertrager nach Anspruch 3 oder 4, **dadurch gekennzeichnet, dass** die erste und/oder zweite Dichtung (21a, 21b) wenigstens zwei, vorzugsweise fünf, Verdickungen (22) aufweist, die mittels wenigstens eines Steges (23), vorzugsweise mit drei Stegen (23), miteinander verbunden sind.

6. Abgas- oder Ladeluftwärmeübertrager nach einem oder mehreren der Ansprüche 3 bis 5, **dadurch gekennzeichnet, dass** die erste und/oder die zweite Dichtung (21a, 21b) das Bord (9) des ersten und/oder zweiten Bodens (6, 7) wenigstens teilweise, insbesondere vollständig, umschließt.

7. Abgas- oder Ladeluftwärmeübertrager nach einem oder mehreren der Ansprüche 3 bis 6, **dadurch gekennzeichnet, dass** zwischen der ersten und/oder zweiten Dichtung (21a, 21b) und dem Bord (9) wenigstens eine Kammer (24) ausgebildet ist und/oder zwischen der ersten und/oder zweiten Dichtung (21a, 21b) und dem Gehäuse (3) an der ersten und/oder zweiten Nut (19, 20) wenigstens eine Kammer (24) ausgebildet ist und/oder die erste und/oder zweite Dichtung (21a, 21b) wenigstens eine Dränageöffnung (25) aufweist.

8. Abgas- oder Ladeluftwärmeübertrager nach einem oder mehreren der vorhergehenden Ansprüche, **dadurch gekennzeichnet, dass** das Gehäuse (3) einen Dränagekanal (26) und/oder wenigstens eine Sollausflussöffnung (27) aufweist, um bei Undichtigkeiten zwischen dem ersten und zweiten Strömungskanal (12, 13) das erste und/oder zweite Fluid nach außen abzuleiten und insbesondere der Dränagekanal (26) und/oder die Sollausflussöffnung (27) in die wenigstens eine Kammer (24) münden.

9. Abgas- oder Ladeluftwärmeübertrager nach einem oder mehreren der Ansprüche 1 bis 8, **dadurch gekennzeichnet, dass** zwischen dem ersten und/oder zweiten Boden (6, 7) außerhalb des Bordes (9) und dem Gehäuse (3) ein Dehnungsspalt (40) vorhanden ist und/oder zwischen dem Ende des Bordes (9) des ersten und/oder zweiten Bodens (6, 7) und dem Gehäuse (3) ein Dehnungsspalt (40) vorhanden ist und in dem Dehnungsspalt (40) die Dichtung (21a, 21b) angeordnet ist.

10. Abgas- oder Ladeluftwärmeübertrager nach einem oder mehreren der vorhergehenden Ansprüche, **dadurch gekennzeichnet, dass** zwischen dem Gehäuse (3) und den Rohren (10) ein Strömungsrichter (28) angeordnet ist.

11. Abgas- oder Ladeluftwärmeübertrager nach Anspruch 10, **dadurch gekennzeichnet, dass** der Strömungsrichter (28) zweiteilig ist, insbesondere zwei Halbschalen (29, 30) umfasst und vorzugsweise der Strömungsrichter (28) wenigstens teilweise, insbesondere vollständig, aus Kunststoff besteht.

12. Anordnung zur Rückführung und Kühlung von Abgas einer Brennkraftmaschine, insbesondere eines Dieselmotors, umfassend
- eine Abgasleitung, vorzugsweise mit einer Abgasturbine,
- eine Ladeluftleitung mit einem, vorzugsweise von der Abgasturbine antreibbaren, Ladeluftverdichter,
- eine Abgasrückführleitung zur Leitung von Abgas von der Abgasleitung zu der Ladeluftleitung,
- einen Abgaswärmeübertrager zur Kühlung von Abgas in der Abgasrückführleitung und/oder einen Ladeluftwärmeübertrager zur Kühlung von Ladeluft in der Ladeluftleitung in Strömungsrichtung der Luft nach dem Ladeluftverdichter,
- vorzugsweise ein Abgassteuerorgan zur Steuerung und/oder Regelung der durch die Abgasrückführleitung leitbaren Menge an Abgas pro Zeiteinheit und/oder vorzugsweise ein Ladeluftsteuerorgan zur Steuerung und/oder Regelung der durch die Ladeluftleitung leitbaren Menge an Ladeluft pro Zeiteinheit,
**dadurch gekennzeichnet, dass**
der Abgaswärmeübertrager und/oder der Ladeluftwärmeübertrager als ein Wärmeübertrager gemäß einem oder mehreren der vorhergehenden Ansprüche ausgebildet ist.

## Claims

1. An exhaust gas or charge air heat exchanger (2), comprising
- a housing (3),
- a first and a second base (6, 7) with openings (8),
- tubes (10) as a first flow channel (12) for conducting a first fluid, the ends of which are arranged in the openings (8) of the first and the second base (6, 7), wherein
- the tubes (10) and the first and the second base (6, 7) are arranged within the housing (3), so that a second flow channel (13) for conducting a second fluid, such as a cooling liquid, is formed between the housing (3) and the tubes (10),
wherein at least one expansion gap (40) is formed between the first and/or second base (6, 7) and the housing (3) in order to balance different expansions between the housing (3) and the tubes (10) and the housing (3) consists completely of plastic and the housing (3) of plastic has at least one inlet and outlet opening (15, 16) for the first fluid and at least one inlet and outlet opening (17, 18) for the second fluid and the tubes (10) and the first and the second base (6, 7) consist completely of metal, in particular aluminium, and the tubes (10) and the first and the second base (6, 7) are materially connected to one another by means of soldering and the housing (10) is in two parts, with a housing pot (4) and a housing lid (5), wherein the first and/or second base (6, 7) has a circumferential board (9), **characterised in that** the board (9) is aligned substantially parallel to an axis of the tubes (10), so that the board (9) forms an end of the first and/or second base (6, 7) in the direction of the axis, and wherein the housing (3) has a circumferential first and second groove (19, 20) on the inside.

2. The exhaust gas or charge air heat exchanger according to claim 1, **characterised in that** the board (9) of the first base (6) is arranged in the first groove (19) and the board (9) of the second base (7) is arranged in the second groove (20).

3. The exhaust gas or charge air heat exchanger according to claim 2, **characterised in that** a first seal (21a) is arranged on the board (9) of the first base (6), so that the first seal (21a) is in contact with the board (9) of the first base (6) and the housing (3) on the first groove (19).

4. The exhaust gas or charge air heat exchanger according to claim 2 or 3, **characterised in that** a second seal (21b) is arranged on the board (9) of the second base (7), so that the second seal (21b) is in contact with the board (9) of the second base (7) and the housing (3) on the second groove (20).

5. The exhaust gas or charge air heat exchanger according to claim 3 or 4, **characterised in that** the first and/or second seal (21a, 21b) has at least two, preferably five thickenings (22) which are connected to one another by means of at least one web (23), preferably three webs (23).

6. The exhaust gas or charge air heat exchanger according to one or more of claims 3 to 5, **characterised in that** the first and/or the second seal (21a, 21b) encloses the board (9) of the first and/or second base (6, 7) at least partially, in particular completely.

7. The exhaust gas or charge air heat exchanger according to one or more of claims 3 to 6, **characterised in that** at least one chamber (24) is formed between the first and/or second seal (21a, 21b) and the board (9) and/or at least one chamber (24) is formed between the first and/or second seal (21a, 21b) and the housing (3) on the first and/or second groove (19, 20) and/or the first and/or second seal (21a, 21b) has at least one drainage opening (25) .

8. The exhaust gas or charge air heat exchanger according to one or more of the preceding claims, **characterised in that** the housing (3) has a drainage channel (26) and/or at least one target outlet opening (27) in order to drain the first and/or second fluid to the outside in case of leakage between the first and second flow channel (12, 13) and in particular the drainage channel (26) and/or the target outlet opening (27) end in the at least one chamber (24).

9. The exhaust gas or charge air heat exchanger according to one or more of claims 1 to 8, **characterised in that** an expansion gap (40) is provided between the first and/or second base (6, 7) outside the board (9) and the housing (3) and/or an expansion gap (40) is provided between the end of the board (9) of the first and/or second base (6, 7) and the housing (3) and the seal (21a, 21b) is arranged inside the expansion (40).

10. The exhaust gas or charge air heat exchanger according to one or more of the preceding claims, **characterised in that** a flow director (28) is arranged between the housing (3) and the tubes (10).

11. The exhaust gas or charge air heat exchanger according to claim 10, **characterised in that** the flow director (28) is in two parts, in particular comprises two half-shells (29, 30) and the flow director (28) preferably consists at least partially, in particular completely of plastic.

12. An arrangement for recirculating and cooling exhaust gas of an internal combustion engine, in particular a diesel motor, comprising
- an exhaust gas line, preferably with an exhaust gas turbine,
- a charge air line with a charge air compressor preferably drivable by the exhaust gas turbine,
- an exhaust gas recirculation line for conducting exhaust gas from the exhaust gas line to the charge air line,
- an exhaust gas heat exchanger for cooling exhaust gas in the exhaust gas recirculation line and/or a charge air heat exchanger for cooling charge air in the charge air line in the flow direction of the air after the charge air compressor,
- preferably an exhaust gas control element for controlling and/or regulating the amount of exhaust gas which can be conducted through the exhaust gas recirculation line per time unit and/or preferably a charge air control element for controlling and/or regulating the amount of charge air which can be conducted through the charge air line per time unit,
**characterised in that**
the exhaust gas heat exchanger and/or the charge air heat exchanger is formed as a heat exchanger according to one or more of the preceding claims.

## Revendications

1. Echangeur de chaleur (2) de gaz d'échappement ou d'air de suralimentation, ledit échangeur de chaleur comprenant :
- un carter (3),
- un premier et un second fond (6, 7) comportant des ouvertures (8),
- des tubes (10) servant de premier conduit d'écoulement (12) pour la circulation d'un premier fluide, tubes dont les extrémités sont disposées dans les ouvertures (8) du premier et du second fond (6, 7),
où les tubes (10) et le premier et le second fond (6, 7) sont disposés à l'intérieur du carter (3), de sorte qu'il se forme, entre le carter (3) et les tubes (10), un second conduit d'écoulement (13) servant à la circulation d'un second fluide tel qu'un liquide de refroidissement,
où au moins un interstice de dilatation (40) est formé entre le premier et / ou le second fond (6, 7) et le carter (3), pour compenser différentes dilatations se produisant entre le carter (3) et les tubes (10), et le carter (3) se compose en totalité de matière plastique et le carter (3) en matière plastique présente au moins une ouverture d'entrée et de sortie (15, 16) pour le premier fluide et au moins une ouverture d'entrée et de sortie (17, 18) pour le second fluide, et les tubes (10) et le premier et le second fond (6, 7) sont en totalité en métal, en particulier en aluminium, et les tubes (10) et le premier et le second fond (6, 7) sont assemblés les uns aux autres, par continuité de matière, en procédant par brasage, et le carter (10) est en deux parties, comprenant un pot de carter (4) et un couvercle de carter (5), où le premier et / ou le second fond (6, 7) présentent un bord circulaire (9), **caractérisé en ce que** le bord (9) est orienté pratiquement de façon parallèle à un axe des tubes (10), de sorte que le bord (9) forme, en direction de l'axe, une extrémité du premier et / ou du second fond (6, 7), et où le carter (3) présente, côté intérieur, une première et une seconde rainure circulaire (19, 20).

2. Echangeur de chaleur de gaz d'échappement ou d'air de suralimentation selon la revendication 1, **caractérisé en ce que** le bord (9) du premier fond (6) est disposé dans la première rainure (19), et le bord (9) du second fond (7) est disposé dans la seconde rainure (20).

3. Echangeur de chaleur de gaz d'échappement ou d'air de suralimentation selon la revendication 2, **caractérisé en ce qu'**un premier joint d'étanchéité (21a) est disposé au niveau du bord (9) du premier fond (6), de sorte que le premier joint d'étanchéité (21a) est en contact, au niveau de la première rainure (19), avec le bord (9) du premier fond (6) et avec le carter (3).

4. Echangeur de chaleur de gaz d'échappement ou d'air de suralimentation selon la revendication 2 ou 3, **caractérisé en ce qu'**un second joint d'étanchéité (21b) est disposé au niveau du bord (9) du second fond (7), de sorte que le second joint d'étanchéité (21b) est en contact, au niveau de la seconde rainure (20), avec le bord (9) du second fond (7) et avec le carter (3).

5. Echangeur de chaleur de gaz d'échappement ou d'air de suralimentation selon la revendication 3 ou 4, **caractérisé en ce que** le premier et / ou le second joint d'étanchéité (21a, 21b) présente au moins deux, de préférence cinq épaississements (22) qui sont reliés les uns aux autres au moyen au moins d'une partie rétrécie (23), de préférence au moyen de trois parties rétrécies (23).

6. Echangeur de chaleur de gaz d'échappement ou d'air de suralimentation selon l'une quelconque ou plusieurs des revendications 3 à 5, **caractérisé en ce que** le premier et / ou le second joint d'étanchéité (21a, 21b) entoure au moins en partie, en particulier en totalité, le bord (9) du premier et / ou du second fond (6, 7).

7. Echangeur de chaleur de gaz d'échappement ou d'air de suralimentation selon l'une quelconque ou plusieurs des revendications 3 à 6, **caractérisé en ce qu'**au moins une chambre (24) est formée entre le premier et / ou le second joint d'étanchéité (21a, 21b) et le bord (9) et / ou **en ce qu'**au moins une chambre (24) est formée entre le premier et / ou le second joint d'étanchéité (21a, 21b) et le carter (3), au niveau de la première et / ou de la seconde rainure (19, 20) et / ou **en ce que** le premier et / ou le second joint d'étanchéité (21a, 21b) présente au moins une ouverture de drainage (25).

8. Echangeur de chaleur de gaz d'échappement ou d'air de suralimentation selon l'une quelconque ou plusieurs des revendications précédentes, **caractérisé en ce que** le carter (3) présente un conduit de drainage (26) et / ou au moins une ouverture de sortie prévue (27), pour évacuer vers l'extérieur le premier et / ou le second fluide, en cas de fuites se produisant entre le premier et le second conduit d'écoulement (12, 13), et en particulier le conduit de drainage (26) et / ou l'ouverture de sortie prévue (27) débouchent dans la chambre (24) au moins au nombre de un.

9. Echangeur de chaleur de gaz d'échappement ou d'air de suralimentation selon l'une quelconque ou plusieurs des revendications 1 à 8, **caractérisé en ce qu'**un interstice de dilatation (40) situé à l'extérieur du bord (9) et du carter (3) est formé entre le premier et / ou le second fond (6, 7) et / ou **en ce qu'**un interstice de dilatation (40) est formé entre l'extrémité du bord (9) du premier et / ou du second fond (6, 7) et le carter (3), et **en ce que** le joint d'étanchéité (21a, 21b) est disposé dans l'interstice de dilatation (40).

10. Echangeur de chaleur de gaz d'échappement ou d'air de suralimentation selon l'une quelconque ou plusieurs des revendications précédentes, **caractérisé en ce qu'**un redresseur de flux (28) est disposé entre le carter (3) et les tubes (10).

11. Echangeur de chaleur de gaz d'échappement ou d'air de suralimentation selon la revendication 10, **caractérisé en ce que** le redresseur de flux (28) est en deux parties, en particulier comprend deux demi-coques (29, 30), et le redresseur de flux (28) se compose de préférence au moins en partie, en particulier en totalité, de matière plastique.

12. Agencement pour le recyclage et le refroidissement de gaz d'échappement d'un moteur à combustion interne, en particulier d'un moteur diesel, ledit agencement comprenant :
- une conduite de gaz d'échappement, comprenant de préférence une turbine à gaz d'échappement,
- une conduite d'air de suralimentation comprenant un compresseur d'air de suralimentation pouvant être entraîné de préférence par la turbine à gaz d'échappement,
- une conduite de recyclage des gaz d'échappement servant à l'acheminement des gaz d'échappement depuis la conduite de gaz d'échappement jusqu'à la conduite d'air de suralimentation,
- un échangeur de chaleur de gaz d'échappement servant au refroidissement des gaz d'échappement dans la conduite de recyclage des gaz d'échappement et / ou comprenant un échangeur de chaleur d'air de suralimentation servant au refroidissement de l'air de suralimentation dans la conduite d'air de suralimentation, ledit refroidissement se produisant dans la direction d'écoulement de l'air en aval du compresseur d'air de suralimentation,
- de préférence un organe de commande de gaz d'échappement servant à la commande et / ou à la régulation de la quantité de gaz d'échappement pouvant être fournie, par unité de temps, par la conduite de recyclage des gaz d'échappement et / ou de préférence un organe de commande d'air de suralimentation servant à la commande et / ou à la régulation de la quantité d'air de suralimentation pouvant être fournie, par unité de temps, par la conduite d'air de suralimentation,
**caractérisé en ce que** l'échangeur de chaleur de gaz d'échappement et / ou l'échangeur de chaleur d'air de suralimentation est conçu comme un échangeur de chaleur selon l'une quelconque ou plusieurs des revendications précédentes.
